# EUROPÄISCHE PATENTSCHRIFT

(11) **EP 2 385 356 B1**
(45) Veröffentlichungstag und Bekanntmachung des Hinweises auf die Patenterteilung: **28.08.2019**
(21) Anmeldenummer: 11003709.0
(22) Anmeldetag: 05.05.2011
(51) Int. Cl.: G01G 11/00

(54) **Wäge- und Sortiervorrichtung**
Weighing and sorting device
Dispositif de pesage et de tri

(30) Priorität: 07.05.2010 DE 102010019742
(43) Veröffentlichungstag der Anmeldung: 09.11.2011
(73) Patentinhaber: Bizerba SE & Co. KG, 72336 Balingen (DE)
(72) Erfinder: Berger, Hermann, 31079 Adenstedt (DE); Oppermann, Christian, 31135 Hildesheim (DE); Horn, Sebastian, 31162 Bad Salzdetfurth (DE); Eiserloh, Katrin, 31134 Hildesheim (DE); Mihlan, Armin, 72336 Balingen (DE)
(74) Vertreter: Manitz Finsterwald Patent- und Rechtsanwaltspartnerschaft mbB

(56) Entgegenhaltungen:
- WO-A1-02/054025
- GB-A- 868 962
- GB-A- 1 545 105
- US-A- 1 545 105
- US-A- 5 877 456
- US-A1- 2007 181 349

## Beschreibung

Die vorliegende Erfindung betrifft eine Wäge- und Sortiervorrichtung für Stückgut.

Kontrollwaagen, bei denen ein Wägeband auf einer Wägezelle abgestützt bzw. aufgebaut ist, werden innerhalb von Produktionsprozessen zur Gewichtskontrolle eingesetzt. Die dabei gewonnenen Daten können im Rahmen einer Inline-Prozesskontrolle sofort ausgewertet werden, beispielsweise um Stückgut zu sortieren, insbesondere Fehlgewichte auszusortieren.

Um einen möglichst hohen Durchsatz zu erreichen, werden hierbei vor allem dynamische Kontrollwaagen eingesetzt, bei denen das zu wiegende Stückgut im Durchlauf gewogen wird, d.h. die Messungen werden vorgenommen, während sich das Stückgut aufgrund einer kontinuierlichen Bewegung des Wägebands ohne Stopp über eine zugeordnete Wägezelle hinweg bewegt. Vor dem Wägeband ist ein Zuführband angeordnet, um dem Wägeband das Stückgut zuzuführen. Nach dem Wägeband ist beispielsweise ein Abführband mit seitlichem Pusher oder ein Kippband angeordnet, um ein Sortieren bzw. Aussortieren des Stückguts anhand der Messergebnisse der Wägezelle durchzuführen.

Allerdings wird das Wägeergebnis durch die Bandübergänge negativ beeinflusst. Bei der Übergabe des Stückguts von dem Zuführband zu dem Wägeband treten aufgrund des unstetigen Übergangs zwischen den beiden Bändern Erschütterungen auf, durch die das Wägeband in Schwingungen versetzt wird, die die Genauigkeit der Bestimmung des Gewichts des Stückguts durch die Wägezelle herabsetzen. Analoges gilt bei der Übergabe des Stückguts von dem Wägeband zu dem Abführband für die Gewichtsbestimmung des nachfolgenden Stückguts.

Dokument US 5,877,456 beschreibt eine Kalibrierung einer Bandwaage mit Hilfe von Testketten. Die Bandwaage ist in einen Zuführabschnitt, einen Wägeabschnitt und einen Abführabschnitt unterteilt, denen ein gemeinsames Wägeband zugeordnet ist. Dokument GB 868,962 offenbart eine Bandwaage mit einem mittig angeordneten Wägeabschnitt. Dokument GB 1 545 105 offenbart eine Bandwägeeinrichtung mit einem Zuführbereich, einem Wägebereich und einem Abführbereich. Dokument US 2007/0181349 A1 offenbart eine Vorrichtung mit einem Zuführband, einem Wägeband und einem Abführband mit Pusher, wie sie vorstehend beschrieben ist. Dokument WO 02/054025 A1 offenbart eine Wäge- und Sortiervorrichtung für Stückgut, mit einer Zuführplattform, einer Wägeplattform und einer Sortierplattform.

Der Erfindung liegt die Aufgabe zugrunde, eine Wäge- und Sortiervorrichtung der eingangs genannten Art anzugeben, die eine Gewichtsbestimmung mit hoher Genauigkeit ermöglicht.

Diese Aufgabe wird durch die Merkmale des Anspruchs 1 gelöst.

Im Gegensatz zu einer aus dem Stand der Technik bekannten Bandkonstruktion mit einem Zuführband, einem Wägeband und einem als Sortiereinrichtung ausgebildeten Abführband, d.h. drei separaten Bändern, die jeweils eigene Umlenkrollen, Gurte und Antriebe besitzen, sind gemäß der Erfindung drei Plattformen vorgesehen, die ein einziges gemeinsames Förderband aufweisen, auf dem das Stückgut über sämtliche Plattformen hinweg transportiert werden kann, und das durch einen einzigen Motor, beispielsweise einen Trommelmotor, der nicht mit gewogen wird, angetrieben werden kann.

Bandübergänge, die bei der Übergabe eines Stückguts Erschütterungen bzw. Schwingungen hervorrufen, sind daher nicht vorhanden, so dass die Bestimmung des Gewichts des Stückguts mit hoher Genauigkeit durchgeführt werden kann. Darüber hinaus ist die erfindungsgemäße Bandkonstruktion kostengünstiger als die aus dem Stand der Technik bekannte Bandkonstruktion.

Insbesondere ist die Vorrichtung dazu ausgebildet, das Sortieren, insbesondere Aussortieren, automatisch und/oder in Abhängigkeit von einem Signal einer Wägezelle durchzuführen.

Zum Sortieren des Stückguts ist die Sortierplattform zwischen einer ausgefahrenen Stellung und einer eingefahrenen Stellung insbesondere horizontal verstellbar und längenverstellbar. Beispielsweise kann das Förderband der erfindungsgemäßen Vorrichtung in der ausgefahrenen Stellung unmittelbar an ein weiteres Förderband angrenzen und durch dieses weitere Förderband kann das Stückgut einer weiteren Be- oder Verarbeitung zugeführt werden. Es findet dann kein Aussortieren des Stückguts statt. Ist die Sortierplattform im Falle eines fehlgewichtigen Stückguts hingegen eingefahren bzw. zurückgezogen, entsteht eine Lücke zwischen dem Förderband der erfindungsgemäßen Vorrichtung und dem weiteren Förderband, und das Stückgut kann herunterfallen und dadurch aussortiert werden. Insbesondere ist die Vorrichtung dazu ausgebildet, bei Verstellung der Stellung der Sortierplattform den Förderbandverlauf an die geänderte Stellung anzupassen.

Da die Sortierplattform in diesem Fall als Rückzugsband ausgebildet ist und das Sortieren bzw. Aussortieren nicht über einen Pusher, der ein auszusortierendes Stückgut senkrecht zur Förderrichtung von dem Abführband stößt und dadurch wiederum Erschütterungen bzw. Schwingungen auslöst, oder ein Kippband, das - anders als ein Rückzugsband - nicht nur horizontale Bewegungskomponenten besitzt und damit auf eine vertikale Gewichtsbestimmung Einfluss nimmt, vorweggenommen wird, kann die Genauigkeit der Gewichtsbestimmung weiter erhöht werden.

Insbesondere umfasst die Sortierplattform einen der Wägeplattform zugewandten und/oder einlaufseitigen Endabschnitt und einen der Wägeplattform abgewandten und/oder auslaufseitigen Endabschnitt, wobei der zugewandte bzw. einlaufseitige Endabschnitt und/oder die Zufuhrplattform fest an der Vorrichtung gehaltert und/oder der abgewandte bzw. auslaufseitige Endabschnitt bewegbar an der Vorrichtung geführt ist. Durch den beweglichen, abgewandten bzw. auslaufseitigen Endabschnitt kann die Sortierplattform zwischen der ausgefahrenen Stellung und der eingefahrenen Stellung, wie sie vorstehend beschrieben sind, verstellt bzw. längenverstellt werden. Durch den fest gehalterten, zugewandten bzw. einlaufseitigen Endabschnitt kann eine gute mechanische Entkopplung der Wägeplattform von der Sortierplattform erreicht werden, so dass durch die Verstellbewegung der Sortierplattform bedingte Rückwirkungen auf die Wägeplattform zumindest weitgehend vermieden werden können.

Bevorzugt ist die bewegbare Führung des abgewandten bzw. auslaufseitigen Endabschnitts als Laufrollenführung ausgebildet. Eine Laufrollenführung besitzt gegenüber einer Gleitführung eine verringerte Reibung, wodurch Rückwirkungen der Verstellbewegung der Sortierplattform auf die Wägeplattform noch weiter reduziert werden können.

Beispielsweise kann die Laufrollenführung eine mit dem abgewandten bzw. auslaufseitigen Endabschnitt fest verbundene Laufrollenanordnung umfassen, die entlang wenigstens einer Schiene, z.B. einem oder mehreren Rundstäben, die insbesondere fest an der Vorrichtung, insbesondere einem Rahmen oder Gestell der Vorrichtung gehaltert sind, bewegbar ist.

Bevorzugt sind der zugewandte bzw. einlaufseitige Endabschnitt und der abgewandte bzw. auslaufseitige Endabschnitt dazu ausgebildet, kämmend ineinander zu greifen, vorzugsweise in sämtlichen Verstellpositionen des abgewandten Endabschnitts. Hierdurch kann ein direkter Kontakt und damit eine erschütterungsverursachende Reibung zwischen den beiden Endabschnitten vermieden werden. Außerdem kann in diesem Fall das Förderband über die gesamte Länge der Sortierplattform hinweg unterbaut und damit abgestützt sein.

Für die ausgefahrene Stellung und/oder die eingefahrene Stellung kann ein Sanftanlauf und/oder Sanftauslauf vorgesehen sein. Die Verstellung der Sortierplattform kann durch einen Aktuator, beispielsweise einen Hubzylinder, bewirkt werden. Der Sanftauslauf kann z.B. durch eine Endlagendämpfung des Aktuators, beispielsweise eine Feder, realisiert werden, die ein sanftes Anfahren bzw. Stoppen des abgewandten bzw. auslaufseitigen Endabschnitts ermöglicht. Alternativ oder zusätzlich kann eine entsprechende Ansteuerung des Aktuators vorgesehen sein, um ein sanftes Anfahren bzw. Bremsen zu ermöglichen.

Nach einer Ausbildung der Erfindung ist das Förderband ein- und auslaufseitig über nicht-rotierende Umlenkeinrichtungen geführt, d.h. an den Längsenden der Vorrichtung werden - anders als im Stand der Technik - keine drehbaren Umlenkrollen verwendet. Derartige Umlenkeinrichtungen, die bevorzugt eine Umlenkkante oder Umlenkrundung für das Förderband aufweisen, können einfacher und besser gereinigt werden als drehbare Umlenkrollen. Dies ist insbesondere bei Verwendung der Wäge- und Sortiervorrichtung im Lebensmittelbereich von Vorteil. Insbesondere handelt es sich bei den beiden nicht-rotierenden Umlenkeinrichtungen um die Zuführplattform und den vorgenannten abgewandten bzw. auslaufseitigen Endabschnitt der Sortierplattform.

Zum Antrieb des Förderbands kann wenigstens ein Stift- oder Stachelrad vorgesehen sein, wobei das Förderband hierfür, insbesondere ein- oder beidseitig randseitig, mit Transportlöchern versehen ist, d.h. das Stift- oder Stachelrad ist mit dem Antrieb verbunden und treibt seinerseits über die Transportlöcher das Förderband an. Hierdurch kann Schlupf zwischen dem Förderband und dem Antrieb, durch welchen Schlupf ggf. Vibrationen erzeugt werden, sicher verhindert werden.

Eine Wägeplattform zugeordnete Wägezelle kann fest an der Vorrichtung, insbesondere einem Rahmen oder Gestell der Vorrichtung gehaltert sein.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben.

Es zeigen, jeweils in schematischer Darstellung,
- Fig. 1: eine perspektivische Ansicht einer Ausführungsform der erfindungsgemäßen Wäge- und Sortiervorrichtung mit einer Sortierplattform in einer ausgefahrenen bzw. eingefahrenen Stellung,
- Fig. 2: eine Seitenansicht der Wäge- und Sortiervorrichtung aus Fig. 1 in der ausgefahrenen bzw. eingefahrenen Stellung,
- Fig. 3: eine vergrößerte Darstellung der Sortierplattform aus Fig. 1 in der ausgefahrenen Stellung, und

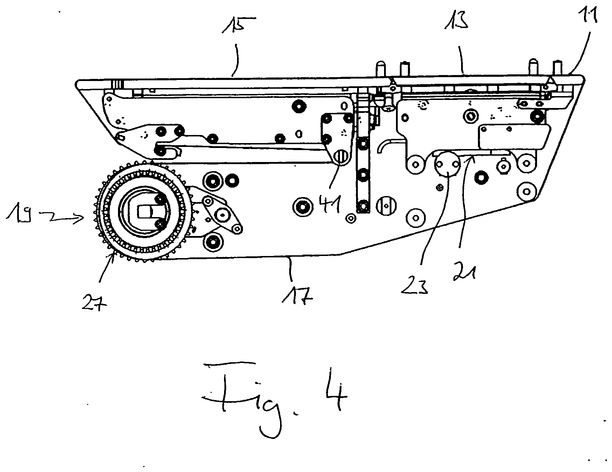

- Fig. 4: eine Seitenansicht einer weiteren Ausführungsform der erfindungsgemäßen Wäge- und Sortiervorrichtung.

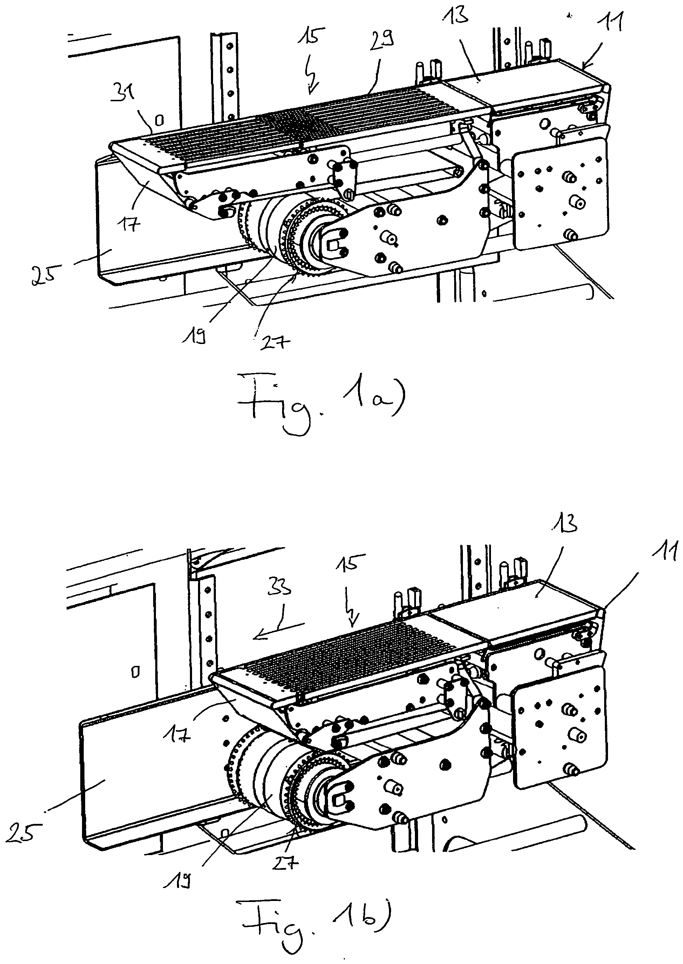

Die in den Fig. 1 - 3 dargestellte kombinierte Wäge- und Sortiervorrichtung umfasst eine Zuführplattform 11, eine Wägeplattform 13 und eine als Sortierplattform 15 ausgebildete Abführplattform. Die Plattformen 11, 13, 15 schließen unmittelbar aneinander an und überlappen nicht. Durch die Plattformen 11, 13, 15 ist eine ungewinkelte, durchgehende Auflageebene definiert, über die ein für die Plattformen 11, 13, 15 gemeinsames, geschlossenes Gurtförderband 17 bzw. Endlosförderband geführt ist.

Durch das gemeinsame Gurtförderband 17 werden unstetige Übergänge zwischen den einzelnen Plattformen 11, 13 und 13, 15 vermieden. Das von der Vorrichtung transportiertes Stückgut löst daher keine Erschütterungen aus, die ansonsten durch derartige Übergänge entstehen und die Genauigkeit einer Gewichtsbestimmung durch eine der Wägeplattform 13 zugeordnete Wägezelle 21 herabsetzen.

Das Gurtförderband 17 wird durch einen Antrieb, insbesondere einen Trommelmotor 19, angetrieben. Der Antrieb 19 bzw. die Antriebswelle des Antriebs 19 ist unterhalb der Plattformen 11, 13, 15 und innerhalb der durch das Förderband 17 gebildeten Schleife angeordnet.

Die Wägeplattform 13 ist mit der unterhalb der Wägeplattform 13 angeordneten Wägezelle 21 gekoppelt, die dazu ausgelegt ist, das Gewicht des sich über die Wägeplattform 13 dynamisch hinweg bewegenden Stückguts zu bestimmen. Die Wägezelle 21 ist über einen Querträger 23 an einer Rückwand 25 der Vorrichtung abgestützt bzw. fest gehaltert. Die Rückwand 25 wiederum ist an einem Gestell oder Rahmen der Vorrichtung gehaltert.

Zum Antrieb des Endlosförderbands 17 umfasst der Trommelmotor 19 zwei Stift- oder Stachelräder 27, die in nicht dargestellte Transportlöcher eingreifen, die an den beiden Randseiten des Endlosförderbands 17 ausgebildet sind. Durch die formschlüssige Verbindung des Antriebs 19 mit dem Endlosförderband 17 kann ein Schlupf zwischen diesen beiden Komponenten ausgeschlossen werden.

Die Sortierplattform 15 ist zweiteilig ausgebildet, d.h. die Sortierplattform 15 umfasst einen einlaufseitigen, der Wägeplattform 13 zugewandten Endabschnitt 29 und einen auslaufseitigen, der Wägeplattform 13 abgewandten Endabschnitt 31. Die beiden Endabschnitte 29, 31 besitzen jeweils eine kammartige Struktur, wobei die Zinken der beiden Endabschnitte 29, 31 komplementär zueinander ausgebildet sind, so dass die beiden Endabschnitte 29, 31 kämmend ineinander greifen können.

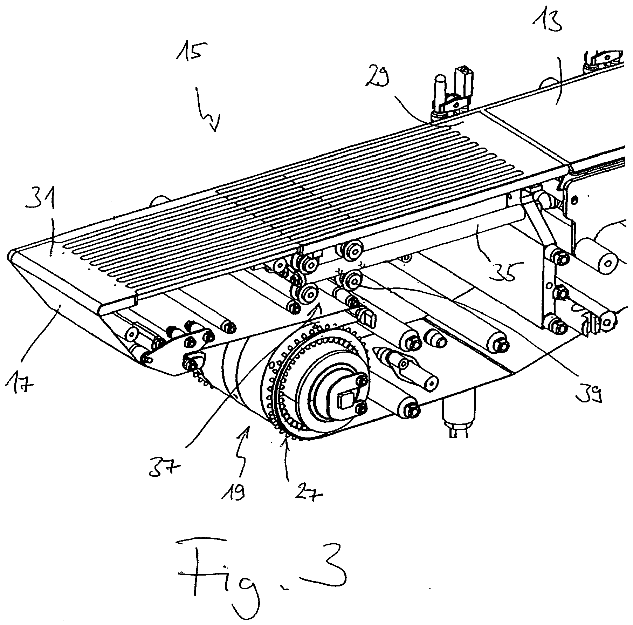

Die beiden Endabschnitte 29, 31 der Sortierplattform 15 sind relativ zueinander bewegbar. Die Sortierplattform 15 ist teleskopisch ausziehbar. Hierbei ist der einlaufseitige Endabschnitt 29 fest und unverschiebbar an der Gesamtvorrichtung gehaltert. Der auslaufseitige Endabschnitt 31 hingegen ist in Förderrichtung 33 stufenlos verschiebbar bzw. verstellbar gelagert. Zur Realisierung der verschiebbaren Lagerung ist eine Laufrollenführung vorgesehen. Die Laufrollenführung umfasst zwei fest an der Vorrichtung gehalterte Schienen in Form von Rundstäben 35, von denen in Fig. 3 lediglich ein Rundstab 35 erkennbar ist, und für jeden der beiden Rundstäbe 35 einen Laufrollenwagen 37 mit vier Laufrollen 39, die paarweise oberhalb und unterhalb des jeweiligen Rundstabs 35 angeordnet sind und mit diesem in Rollkontakt stehen.

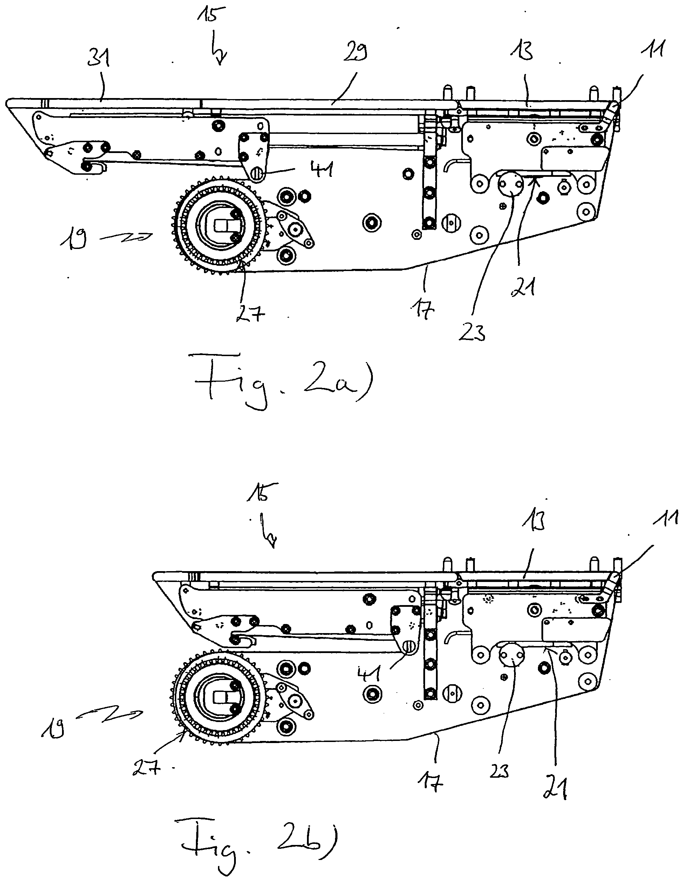

Über den auslaufseitigen Endabschnitt 31 ist die Sortierplattform 15 zwischen der in den Fig. 1a und 2a gezeigten auseinander gezogenen Stellung und der in den Fig. 1b und 2b gezeigten zurückgezogenen Stellung verstellbar. Die Sortierplattform 15 ist damit in ihrer Länge verstellbar. In den Fig. 1a und 2a kann an die gezeigte Wäge- und Sortereinrichtung auslaufseitig ein weiteres Förderband anschließen, mit dem das über die Vorrichtung transportierte Stückgut an eine weitere Bearbeitungsstation übergeben werden kann. In der rückgezogenen Position des auslaufseitigen Endabschnitts 31 gemäß den Fig. 1b und 2b hingegen fällt das Stückgut aufgrund seiner Gewichtskraft nach unten und kann hierdurch sortiert bzw. aussortiert werden.

Da sich die Gesamtlänge der Vorrichtung beim Zurückziehen der Sortierplattform 15 bzw. beim Aussortieren eines Stückguts ändert, ist eine entsprechende Anpassung des Verlaufs des Endlosförderbands 17 bevorzugt. Diese Anpassung wird durch eine mit dem auslaufseitigen Endabschnitt 31 verbundene Umlenkrolle 41 erreicht, die in Bandrichtung zwischen dem auslaufseitigen Ende des auslaufseitigen Endabschnitts 31 und dem Antrieb 19 angeordnet ist. Durch die vorgegebene Anordnung des auslaufseitigen Endes des abgewandten Endabschnitts 31, der Umlenkrolle 41 und dem Trommelmotor 19 wird eine Längenänderung des Obertrums durch eine entsprechende Längenänderung der durch die Umlenkrolle 41 im Untertrum gebildeten Schleife ausgeglichen.

Die beiden Umlenkpunkte für das Obertrum des Förderbands 17 werden durch das einlaufseitige Ende der Zuführplattform 11 und das auslaufseitige Ende des abgewandten Endabschnitts 31 gebildet. Diese beiden Enden sind jeweils nicht durch eine drehbare Umlenkrolle gebildet, sondern nicht-rotierend ausgebildet. Da in diesen Bereichen keine drehbeweglichen Teile vorgesehen sind, kann die Wäge- und Sortiervorrichtung einfach und schnell gereinigt werden.

Die erfindungsgemäße Wäge- und Sortiervorrichtung erlaubt trotz Sortierens eine erschütterungsfreie und damit hochgenaue Bestimmung des Gewichts von Stückgut.

### Bezugszeichenliste

- 11: Zuführplattform
- 13: Wägeplattform
- 15: Sortierplattform
- 17: Förderband
- 19: Antrieb
- 21: Wägezelle
- 23: Querträger
- 25: Rückwand
- 27: Stiftrad
- 29: Endabschnitt
- 31: Endabschnitt
- 33: Förderrichtung
- 35: Rundstab
- 37: Laufrollenwaagen
- 39: Laufrolle
- 41: Umlenkrolle

## Patentansprüche

1. Wäge- und Sortiervorrichtung für Stückgut, mit einer Zuführplattform (11), einer Wägeplattform (13) und einer Sortierplattform (15), wobei die Plattformen (11, 13, 15) mit einem gemeinsamen Förderband (17) versehen sind, wobei zum Sortieren des Stückguts die Sortierplattform (15) zwischen einer ausgefahrenen Stellung und einer eingefahrenen Stellung verstellbar und längenverstellbar ist.

2. Wäge- und Sortiervorrichtung nach Anspruch 1,
**dadurch gekennzeichnet,**
**dass** die Sortierplattform (15) einen der Wägeplattform (13) zugewandten Endabschnitt (29) und einen der Wägeplattform (13) abgewandten Endabschnitt (31) umfasst, wobei der zugewandte Endabschnitt (29) fest an der Vorrichtung gehaltert und/oder der abgewandte Endabschnitt (31) bewegbar an der Vorrichtung geführt ist.

3. Wäge- und Sortiervorrichtung nach Anspruch 2,
**dadurch gekennzeichnet,**
**dass** die bewegbare Führung des abgewandten Endabschnitts (31) als Laufrollenführung ausgebildet ist.

4. Wäge- und Sortiervorrichtung nach Anspruch 3,
**dadurch gekennzeichnet,**
**dass** die Laufrollenführung eine mit dem abgewandten Endabschnitt (31) fest verbundene Laufrollenanordnung (39) umfasst, die entlang wenigstens einer Schiene (35) bewegbar ist.

5. Wäge- und Sortiervorrichtung nach einem der Ansprüche 2 bis 4,
**dadurch gekennzeichnet,**
**dass** der zugewandte Endabschnitt (29) und der abgewandte Endabschnitt (31) dazu ausgebildet sind, kämmend ineinander zu greifen.

6. Wäge- und Sortiervorrichtung nach einem der vorstehenden Ansprüche,
**dadurch gekennzeichnet,**
**dass** für die ausgefahrene Stellung und/oder die eingefahrene Stellung ein Sanftanlauf und/oder ein Sanftauslauf vorgesehen ist.

7. Wäge- und Sortiervorrichtung nach einem der vorstehenden Ansprüche,
**dadurch gekennzeichnet,**
**dass** das Förderband (17) ein- und auslaufseitig über nicht-rotierende Umlenkeinrichtungen (11, 31) geführt ist.

8. Wäge- und Sortiervorrichtung nach einem der vorstehenden Ansprüche,
**dadurch gekennzeichnet,**
**dass** zum Antrieb des Förderbands (17) wenigstens ein Stift- oder Stachelrad (27) vorgesehen ist, wobei das Förderband (17) hierfür, insbesondere ein- oder beidseitig randseitig, mit Transportlöchern versehen ist.

9. Wäge- und Sortiervorrichtung nach einem der vorstehenden Ansprüche,
**dadurch gekennzeichnet,**
**dass** eine der Wägeplattform (13) zugeordnete Wägezelle (21) fest an der Vorrichtung, insbesondere einem Rahmen oder Gestell der Vorrichtung gehaltert ist.

## Claims

1. A weighing and sorting apparatus for individual goods, comprising a feed platform (11), a weighing platform (13); and a sorting platform (15), wherein the platforms (11, 13, 15) are provided with a common conveyor belt (17), with the sorting platform (15) being adjustable between an extended position and a retracted position and being longitudinally adjustable to sort the individual goods.

2. A weighing and sorting apparatus in accordance with claim 1,
**characterized in that**
the sorting platform (15) comprises an end section (29) facing the weighing platform (13) and an end section (31) remote from the weighing platform (13), with the facing end section (29) being fixedly held at the apparatus and/or the remote end section (31) being movably guided at the apparatus.

3. A weighing and sorting apparatus in accordance with claim 2,
**characterized in that**
the movable guide of the remote end section (31) is configured as a roller guide.

4. A weighing and sorting apparatus in accordance with claim 3,
**characterized in that**
the roller guide comprises a roller arrangement (39) which is fixedly connected to the remote end section (31) and which is movable along at least one rail (35).

5. A weighing and sorting apparatus in accordance with any one of the claims 2 to 4,
**characterized in that**
the facing end section (29) and the remote end section (31) are configured to engage into one another in a meshing manner.

6. A weighing and sorting apparatus in accordance with any one of the preceding claims,
**characterized in that**
a smooth start and/or a smooth stop is/are provided for the extended position and/or for the retracted position.

7. A weighing and sorting apparatus in accordance with any one of the preceding claims,
**characterized in that**
the conveyor belt (17) is guided over non-rotating deflection devices (11, 31) at the inlet side and outlet side.

8. A weighing and sorting apparatus in accordance with any one of the preceding claims,
**characterized in that**
at least one pin wheel or sprocket wheel (27) is provided for driving the conveyor belt (17), with the conveyor belt (17) for this purpose being provided with transport holes, in particular at one side or at both sides at the margin side.

9. A weighing and sorting apparatus in accordance with any one of the preceding claims,
**characterized in that**
a load cell (21) associated with the weighing platform (13) is fixedly held at the apparatus, in particular at a frame or rack of the apparatus.

## Revendications

1. Dispositif de pesage et de tri pour marchandises de détail, comportant une plate-forme d'alimentation (11), une plate-forme de pesage (13) et une plate-forme de tri (15),
dans lequel
les plates-formes (11, 13, 15) sont pourvues d'une bande transporteuse commune (17), et pour trier les marchandises de détail, la plate-forme de tri (15) est déplaçable entre une position déployée et une position rétractée et est réglable en longueur.

2. Dispositif de pesage et de tri selon la revendication 1,
**caractérisé en ce que**
la plate-forme de tri (15) comprend une portion d'extrémité (29) tournée vers la plate-forme de pesage (13) et une portion d'extrémité (31) détournée de la plate-forme de pesage (13), la portion d'extrémité (29) tournée étant fermement retenue sur le dispositif et/ou la portion d'extrémité (31) détournée étant guidée de façon mobile au niveau du dispositif.

3. Dispositif de pesage et de tri selon la revendication 2,
**caractérisé en ce que**
le guidage mobile de la portion d'extrémité détournée (31) est réalisé sous forme de guidage à galets roulants.

4. Dispositif de pesage et de tri selon la revendication 3,
**caractérisé en ce que**
le guidage à galets roulants comprend un ensemble de galets roulants (39) fermement relié à la portion d'extrémité détournée (31), qui est mobile le long d'au moins un rail (35).

5. Dispositif de pesage et de tri selon l'une des revendications 2 à 4,
**caractérisé en ce que**
la portion d'extrémité (29) tournée et la portion d'extrémité détournée (31) sont réalisées pour s'engager l'une dans l'autre par engrènement.

6. Dispositif de pesage et de tri selon l'une des revendications précédentes,
**caractérisé en ce que**
pour la position déployée et/ou pour la position rétractée, il est prévu un moyen de démarrage en douceur et/ou un moyen de sortie en douceur.

7. Dispositif de pesage et de tri selon l'une des revendications précédentes,
**caractérisé en ce que**
du côté entrée et sortie, la bande transporteuse (17) est guidée par des moyens de renvoi (11, 31) non rotatifs.

8. Dispositif de pesage et de tri selon l'une des revendications précédentes,
**caractérisé en ce que**
pour entraîner la bande transporteuse (17), il est prévu au moins une roue à pointes ou à picots (27), et à cet effet la bande transporteuse (17) est pourvue de trous de transport du côté bord, en particulier unilatéralement ou bilatéralement.

9. Dispositif de pesage et de tri selon l'une des revendications précédentes,
**caractérisé en ce que**
une cellule de pesage (21) associée à la plate-forme de pesage (13) est montée fermement sur le dispositif, en particulier sur un cadre ou sur un bâti du dispositif.
